# EUROPEAN PATENT SPECIFICATION

(11) **EP 3 156 221 B1**
(45) Date of publication and mention of the grant of the patent: **01.04.2020**
(21) Application number: 16155341.7
(22) Date of filing: 11.02.2016
(51) Int. Cl.: B32B 9/00

(54) **METHOD OF PRODUCTION OF OBJECTS IN STONE AND COMPOSITE MATERIAL**
VERFAHREN ZUR HERSTELLUNG VON OBJEKTEN IN STEIN UND VERBUNDMATERIAL
PROCÉDÉ DE PRODUCTION D'OBJETS EN PIERRE ET MATÉRIAU COMPOSITE

(30) Priority: 14.10.2015 CH 14872015
(43) Date of publication of application: 19.04.2017
(73) Proprietor: Generelli S.A., 6802 Rivera (CH)
(72) Inventor: GENERELLI, Matteo, 6802 Rivera (CH); GENERELLI, Moreno, 6802 Rivera (CH)
(74) Representative: Fiammenghi, Alessandro

(56) References cited:
- WO-A1-03/035994
- WO-A1-2007/052319
- WO-A1-2008/117316
- WO-A1-2017/021505
- DE-U1-202006 019 074
- US-A1- 2009 145 415

## Description

### Field of the technique

The present invention concerns a method of production of an object in stone and composite materials.

### Known art

Document US 2009/145415 A1 discloses a method of production of an object in stone and composite material by means of the application of layers of said composite material to said object in stone, said method comprising: - a first phase of definition of a physical or virtual model of an object; - a second and subsequent phase of evaluation of a piece of stone of natural type; - a phase of working by means of milling a piece of natural stone selected in advance to the end of reducing the size and the shape thereof to that indicated in said physical or virtual model; - a phase of verifying the curvature and the roughness of the surface of the milled natural stone, so that they are lower than the minimum necessary for the application of the composite material; - a phase of selecting the composite material of said composite material according to the shape of the object in stone and composite material to be created; - a phase of cutting said composite material according to the shape of the object in stone and composite material to be created; - a subsequent phase of application of layers of composite material on a surface of said piece of milled natural stone by means of gluing on said surface and without a step of polishing.

Today many of the objects that we use in the houses in our common life are realized in stone. These objects, principally, are realized with stones provided with a high thickness.

In fact, the reduction of the thickness of the stone, in particular in case the object shall have pronounced cavities, weakens the object same point the weakening is directly proportional also to the hardness and to the type of the stone.

The applicant has found that it is not possible to realize objects of reduced thickness purely in stone, since their resistance is significantly compromised.

The scope of the present invention is to describe a method of production of objects in stone and composite material which allows of solving the aforementioned drawback, and in detail, allows for realizing objects with the most various shapes, also provided with reduced diameter curvatures, with a very low thickness and with a resistance to shocks and to stresses being increased respective to the traditional objects.

### Summary of the invention

According to the present invention, there is provided a method of production of an object in stone and composite material according to claim 1.

Further preferred embodiments are defined by the features of the dependent claims 2-9.

### Description of the annexed figures.

The invention will be now described in a preferred and non-limiting embodiment with reference to the annexed figures wherein:
- figure 1 shows a general flow chart of a method of production of objects in stone composite material according to the present invention.
- figure 2 shows a flow chart of a sub phase of evaluation of the stone being part of the method described in the present invention;
- figure 3 shows a flow chart of a sub phase of preparation of working being part of the method described in the present invention;
- figure 4 shows a sub phase of first machine working of the natural stone being part of the method described in the present invention;
- figure 5 shows a phase of application of the components being part of the method object of the present invention;
- figure 6 shows a plurality of intermediate optional phases of the method described in the present invention; and
- finally, figure 7, shows a sub phase of finishing being part of method described in the present invention.

### Detailed description of the invention

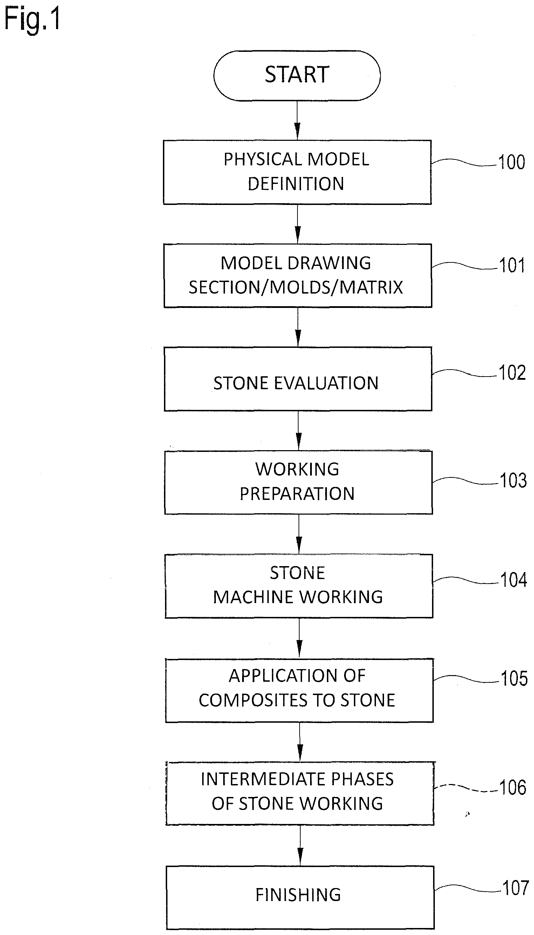

Figure 1 shows in general terms a flow chart of the method of production of the object in stone and composite material according to the present invention.

The object that can be created according to the method of the present invention, can have also the curvature of a diameter significantly low, for example, said diameter, can be reduced up to 1 or 2 mm. According to the method of the present invention, furthermore, also the thickness of the object in stone can be significantly reduced up to a minimum of 1, 2 mm. In such a way can be realized objects also provided with a principal internal cavity lighter with respect to the traditional objects and with forms that in past could not be used in case the object were realized totally in stone.

A first phase of said method, as described in block 100, is represented by the definition of the physical model of the object to be created by means of a tridimensional scanner. If the physical model is not present, we work directly from the virtual model on the computer. Subsequently, block 101, by means of a specifically designed software a drawing of the object is realized and then an adaptation of said drawing selecting a plurality of sections or composable elements being part of the object to be worked and defining a plurality of molds according to the offset technology and countermoulding matrixes.

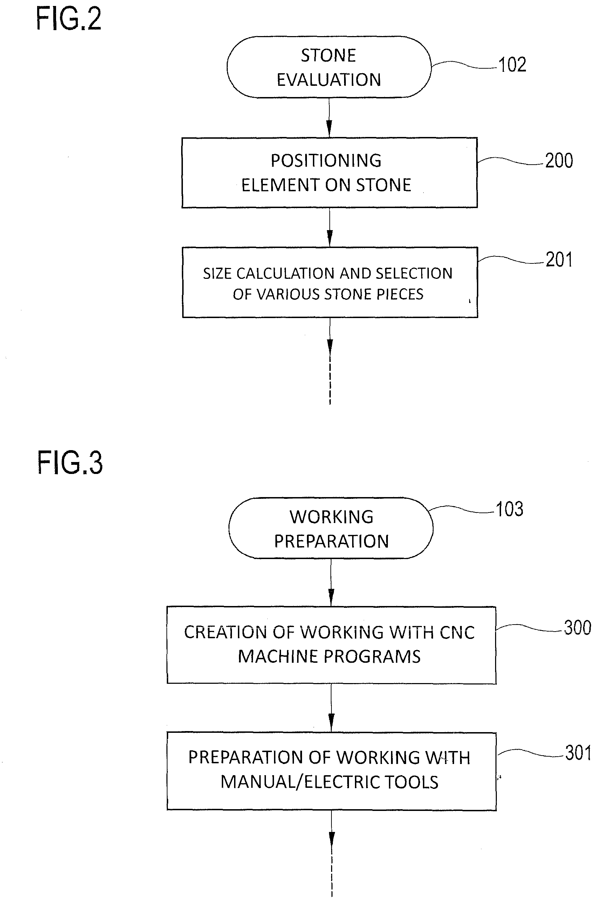

Subsequently (block 102), the method which is object of the present invention provides for an analysis of the stone to be used. As shown in detail in figure 2, in particular in said step of evaluation of the stone 102, at first the type of stone to be used is selected, for example and in a non-limiting extent granite, and subsequently once defined the size of the stone, the various elements (block 200) to be created are positioned on a surface of the stone itself. Then, where necessary, according to the size of the various elements that will then compose the object at first drawn and defined on physical or virtual model, the various pieces of natural stone (block 201) are selected.

As shown in figure 1 and more in detail in figure 3, subsequently, in a phase of preparation of the working 103, in a step of creation of the working (block 300) are created all the working of the stone with programs specific for numeric control machine and are defined (block 301) the working necessary to perform with manual and/or electrical tools of the external surface of the stone. In said phase, it is in detail kept into account the direction of the lines of fracture or splitting, layers and texture of the piece of stone, in order to make the future working, hereinafter described, causes as most as possible the minimum impact on the robustness of the future object to create. In detail, according to the type of stone, the cutting takes place in accordance to the type of object that shall be created. A stone can be defined with a plane (that follows the lines of fracture) and an edge (that is orthogonal to the plane). On the edge, if the stone is of a schist type there are visible lines of fracture, while on the plane typically only the texture of the stone is visible. The most part of the workings is positioned with the plane visible or used in such a way to be visible on the exposed part of the object that is wanted to be created.

For example in case it is wanted to realize an object which is hollow and cylindrical, like for example a basin for a fountain, it is necessary that the "beautiful" part of the stone is the upper ring, but is also important as well that the edge of the stone appears uniformly on the lateral surface of the cylinder.

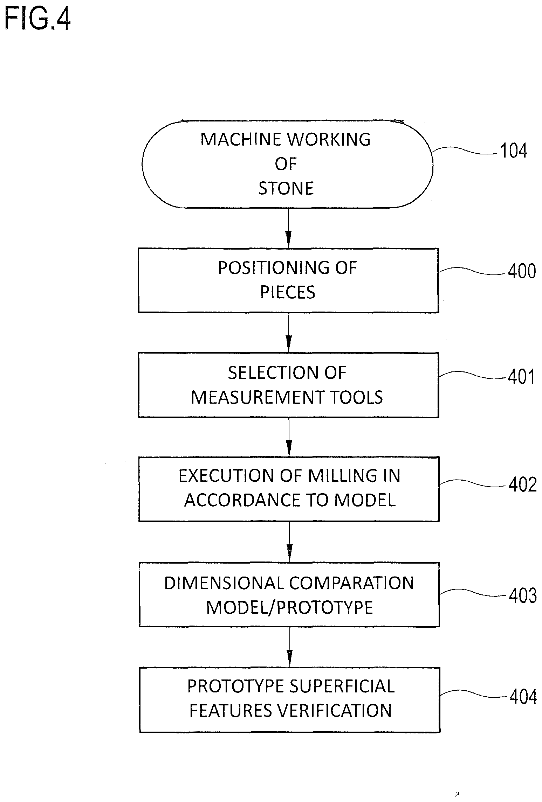

Therefore the method described in the present invention involves a first phase of working of the natural stone 104. As shown with more detail in figure 4, in said first phase of working of the natural stone, at first the various pieces of stone selected in advance are positioned (block 400) on banks of numeric control machines or on a table for a working manual.

Preferably the working in milling takes place with a numeric control machine, in which a software program automatically drives the rotation and the motion of one or more tools of milling on the working table of the machine tool in accordance to the tridimensional model defined in advance for the object to create.

Then (block 401) manually or through an automatic procedure, it is verified that the tool for working the stone is of an adequate measure compared with the size of the various pieces of stone to be worked. In case the size of the tools is not compatible, these are exchanged according to a procedure which is preferably but in a non-limiting extent automatic.

Then, said first phase of working of the natural stone presents a step of preferably automatic execution of the millings which are necessary to shape the various pieces of stone (block 402). In said phase of milling, the pieces of stone see their thickness and size reduced in such a way to have an external shape substantially recalling that of the various parts of the object that will be subsequently realized.

Then, said first phase of working of the natural stone 104, comprises a measuring (block 403) of the size of the stone respective to the model in advance created by means of the molds, and said procedure of control of the measures results particularly important since the object in stone shall be then covered on at least one own surface by composite material.

Since in fact, as it will be better described after, the composite material is also cut according to the size and the various components and elements of the object that will be then created, the dimensional coupling, correct and precise, between the pieces of stone worked by means of milling and the composite material itself shall be performed with the maximum precision without having significant deviations of a dimensional type. This allows for reducing the wastes of composite material, significantly costly.

Finally, the first phase of working of the natural stone 104, comprises a control of the surface of the object in stone. In said superficial control (block 404), it is manually verified by means of an automatic or semi automatic electronic instrument control that the worked surface of the stone is conform to the model and is compatible with the application of the various composites. In said sense, it is verified in detail that the curvature of the surface and the roughness thereof are lower than the minimum necessary for the application of the composite material.

To the end of applying the composite material, the applicant underlines that the surface of the stone is not treated by means of polishes and or by means of chemical products.

Once the first phase of machine working of the stone 104 is ended, the method described along the present description comprises a step of application of the composite components to said object in stone so realized. Said step is schematically indicated in block 105.

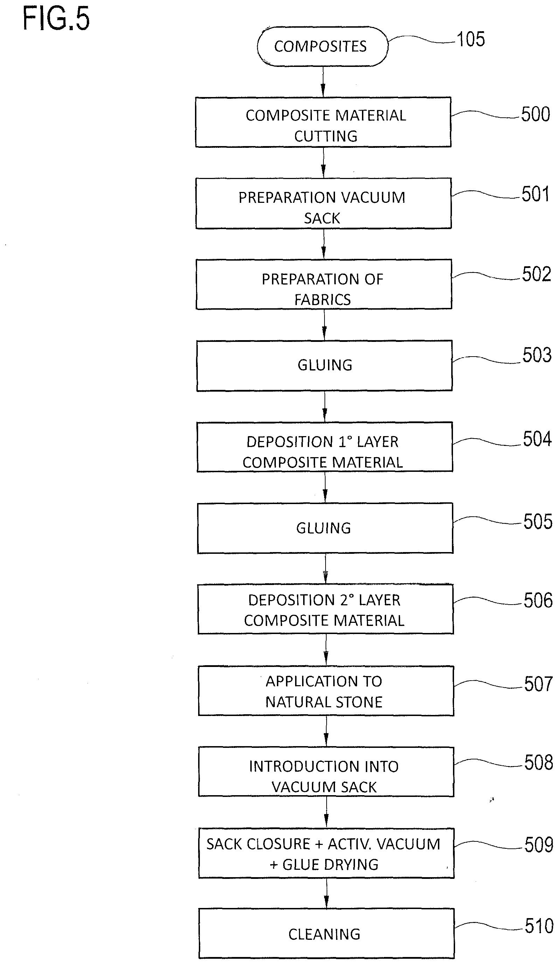

As it is shown in detail in figure 5, in said step of application of the composite components to the stone, at first there is a phase of study of the solutions composed according to the final features of the object to be created. In said phase of study, is selected which, among the composite materials is preferably applicable and which is the direction of the fibers of composite material to apply on the object to be constructed according also on the shape of the object itself.

Examples of composite material can be carbon fiber or aramid fiber and which for example in a non-limiting extent the Kevlar fiber.

Subsequently the composite material that is of a flexible type, is cut (block 500) according to the shape of the elements of the object to create.

Then, the vacuum sack is prepared as well with the peel ply of the various tissues (block 502). Then a glue that preferably is a glue of a bi-component type, is automatically applied on the layer of the composite material, and, in detail, is applied only on one face of the same (block 503). According to the invention, more layers of composite material are superimposed one over the other. At each superimposition, between a layer of composite material and the other there is the deposition of one layer of glue preferably but in a non-limiting extent of the same type of the preceding ones (blocks 504, 505, 506).

The amount of glue which is necessary per unit of surface, that is grams per square meter, are carefully defined in accordance to the features of porosity of the stone. The greater its porosity is, the greater is the amount of glue used. The less the porosity is, the less is the amount of glue used.

Where the stone has to be glued along the lines of fracture, or edge, is preferably used greater amount of glue than what is used if the glue would be distributed on the plane of the stone.

Therefore, according to the method of the present invention, the amount of glue necessary is distributed in accordance to the direction of gluing respective to the lines of fracture.

The layers of composite material preferably follow a specific order. In detail, said being 0° the first layer of composite material, the second layer directly in contact with the first follows an angle at 90° respective to the first; the third layer of composite material follows instead an angle between, 90° and 45° respective to the second. The fourth layer of composite material presents one of the following angles: 90°, 45°, 135°.

Therefore in general the superimposition of many adjacent layers of composite material follows a relative direction at 0°, 90° or 45°, to the end of ensuring the maximal resistance of the finished artifact.

The applicant underlines that angles comprising 18,5° or 78,5° and similar thereto are to be avoided since they do not contribute to a sufficient holding of the artifact. More in general, the layers are glued avoiding angles of relative direction in the interval [17-19]° and [76-80]° one respective to the other.

Furthermore, where in the stone to be worked are provided holes for fixing pins or plates or similar objects, there is locally an apposition of a number of layers of composite material greater than the one that lies on the rest of the stone.

Then, the lower layer of composite material is applied at the element in stone by means of gluing (block 507), and this is introduced into the vacuum sack (block 508). The air present in the vacuum sack is sucked so that the glue dries according to the technical times which are necessary to the drying of the same (block 509).

Preferably but in a non-limiting extent, said vacuum sack can also be introduced in an autoclave, and then be further subjected to an external pressure and optionally to a source of heat. This allows of working with greater precision also with angles of 90° or anyway surfaces with angly junctions of a very low diameter without the risk of seeing the layers of composite material superimposed on the natural stone flake apart. Therefore, positioning the vacuum sack in the autoclave, there is even more adaptability of the working on the various surfaces of the stone. Then starting from the semi-worked in stone and from the various layers of composite material superimposed one over the other, by means of the interposition of a layer of glue, they are removed from the vacuum sack and cleaned (block 510) in the various parts eventually exceeding.

Preferably but in a non-limiting extent, where necessary, can be still applied layers of composite material glued by means of glue and/or be performed steps of filling of residual spaces with pure composite material.

According to the invention, the various layers of composite material are applied in such a way that the general orientation of the fibers of one layer differs from the general orientation of the fibers of the layer superimposed thereto; in such a way, advantageously, the resistance of the object to the stresses and in particular in the various directions results being more uniform.

At the moment of the gluing of the plurality of layers of composite material to the natural stone, is selected a glue according to the type of the stone, and - optionally - basing also on the texture of this last. Various types of stones differentiate one to the other at least by features of porosity. Therefore, where there are stones more porous (e.g. travertino), it is preferable to use bi-component epoxy glues - compatible with the applications on composite material - of a more dense type. In contrast, in case there are stones less porous, it is preferable to use of the bi-component epoxy glues - always compatible with applications on composite material - of a less dense type and therefore being more liquid.

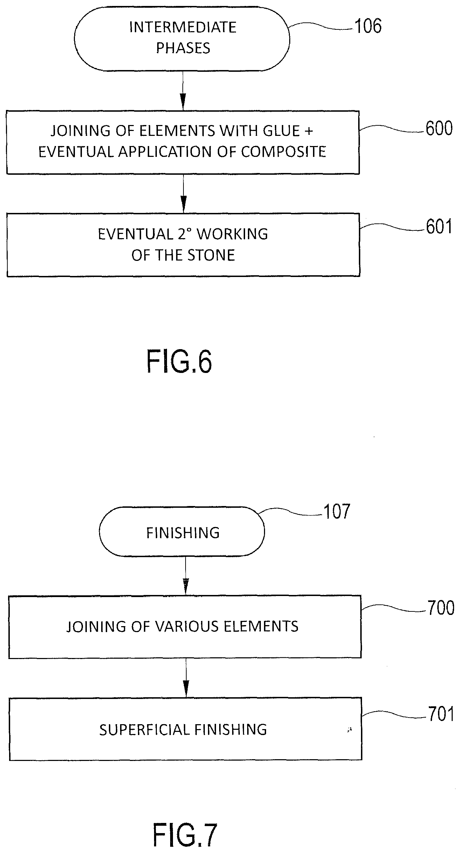

The method described in the present invention presents, optionally, a phase intermediate of working of the stone 106. As described with greater detail in figure 6, in said phase intermediate, where this last becomes necessary, the various elements of the object in stone are jointed each other (block 600) by means of glue and eventually is further applied a layer of composite material. Where said layer of composite material is applied the technique of the vacuum sack previously described is newly used, eventually with the aid of an autoclaves previously described.

Where necessary, the method described in the present invention comprises furthermore a second phase of working of the natural stone (block 601) that is necessary in case the model shall be further worked for reaching a specific shape and size.

In said second phase of working of the natural stone, at first the various pieces to be worked are positioned on the benches for numeric control machines. Subsequently once more the size of the tools for working the stone is controlled automatically or by means of a manual procedure and if necessary, these last are exchanged. Then is newly performed a phase of milling of the object in stone and a dimensional control respective to the model in advance created. As in the case of the first working of the natural stone, it is finally verified the compatibility of the worked surface by means of milling to the application of a flexible layer of composite material.

Finally, is performed a phase of finishing 107 of the element in stone created, wherein the various elements with or without glue are jointed (block 700) and are performed the last reciprocal dimensional controls. In said phase of finishing 107, is furthermore provided a sub phase of superficial finishing (block 701) on the base of the need of the model with high-precision machines with numeric control or by means of a procedure of lapping of a manual type anyway performed, preferably, by means of electric tools. In detail, said electric tools can be technically and equivalently exchanged with compressed air tools, that advantageously allow of having different finishing like for example a smoothing, satinizing, flaming, bush-hammering. Still, the material can be non-treated, leaving therefore its external surface at a natural status.

Further phases of working of the object in stone composite material so created can comprise an overall study of the model with various bearing structures for mechanically sustaining the resistance of the model itself and having then an optimal fabrication. Said overall study is particularly useful for those objects that are not targeted only to be ornaments but are suitable to be applied on further objects or to be stressed by means of mechanical stresses multiaxial and repeated and of a significant relevance; furthermore can be replicated the aesthetic shape of the stone also one the side covered by the composite material. In that case, there is a procedure at first with a tridimensional scanning of the object and subsequently to an adaptation of the model with a software for creating the rear surface that then will be applied with the method previously described.

The advantages of the herewith described invention are the following. In particular, through the method described in the present description the object in stone can be produced without any adaptation of the reticular molecular structure of the natural stone, with a significantly lower weight, since the size of the thicknesses of the various walls can be reduced respective to the conventional system and, furthermore with of the objects suitable of resisting significantly to stresses of a level and duration higher respective to the past. Secondly, the method described in the present invention, can be made tridimensional objects in stone of a specific form with a relevant possibility of application respective to what was possible in past. Furthermore, the quality of the finished product is significantly higher, since many objects of a common use of thickness and reduced weight are not realized in natural stone but in a plastic material that simulates the aspect of the stone itself.

Therefore with the method object of the present invention can be realized objects significantly more ecologic respective to the traditional objects in plastics. Furthermore, through the method described in the present invention can be created many objects of the same type practically identic one with respect to the other, in such a way, with the method described in the present invention a substantially identic reproducibility of the objects that are defined is guaranteed.

Furthermore, thanks to the use of the technique of composite materials flexible in the production of the objects, is also possible to realize objects of design that have a bearing structure in stone suitable for resisting to stresses significantly higher respective to the past.

It is finally clear that to the method object of the present invention can be applied additions or variants obvious for a technician of the art, without for this departing from the scope of protection provided by the annexed claims.

## Claims

1. Method of production of an object in stone and composite material by means of the application of layers of said composite material to said object in stone, said method comprising:
- a first phase (100) of definition of a physical or virtual model of an object;
- a second and subsequent phase of evaluation of a piece of stone of natural type;
- a phase of working by means of milling (104) a piece of natural stone selected in advance to the end of reducing the size and the shape thereof to that indicated in said physical or virtual model;
- a phase of verifying the curvature and the roughness of the surface of the milled natural stone, so that they are lower than the minimum necessary for the application of the composite material;
- a phase of selecting the composite material and the direction of fibers of said composite material according to the shape of the object in stone and composite material to be created;
- a phase of cutting said composite material according to the shape of the object in stone and composite material to be created.
- a subsequent phase of application of layers of composite material (105) on a surface of said piece of milled natural stone by means of gluing on said surface and without a step of polishing, wherein said layers of composite material are superimposed one over the other deposing one layer of glue between a layer of composite material and the other;
wherein said plurality of layers of composite material are of a flexible type and said plurality of layers of composite material are oriented with a direction of the fibers distinguished one layer of composite material with respect to the other layer of composite material.

2. Method according to claim 1, **characterized in that** said layers of composite material comprise layers of materials different and comprise carbon or aramid material.

3. Method according to any of the preceding claims, **characterized in that**, in a phase of application of said plurality of layers of composite material (105) on a surface of said piece of milled natural stone, following said gluing there is a step of introduction of an assembly realized by a plurality of layers of composite material superimposed to a surface of the said natural stone worked inside a vacuum sack (508) from a step of waiting (509) of a time necessary to the drying of the various layers of glue interposed between a plurality of layers of composite material and the layer of material in natural stone.

4. Method according to any of the preceding claims, **characterized in that** said step of gluing is performed by means of the application of a epoxy bi-component glue whose fluidity is in advance selected at least in accordance to the features of porosity of said natural stone and/or in accordance to the direction of lines of fracture of the stone.

5. Method according to any of the preceding claims, **characterized in that** following of the said phase of working of the said stone (104) by means of milling, following the gluing of said layers of composite material onto said at least one surface of the said stone, takes place a further phase of working by means of milling (601) of the said natural stone for a reduction of the overall thickness thereof.

6. Method according to any of the preceding claims, **characterized in that** said phase of working by means of milling take place by means of a step of positioning of the said natural stone on a numeric control machine and said phase of milling takes place automatically, in accordance to the execution of a software program for electronic computer operating the activation of one or more tools of milling in accordance to a tridimensional software model of the object to create.

7. Method according to any of the preceding claims, **characterized in that** following of the said phase of milling is present a step of verification of superficial features of said natural stone (404) before the application by means of gluing of said plurality of layers of said composite material.

8. Method according to any of the preceding claims, **characterized in that** said superimposition of layers of composite material comprises arranging said layers with direction of fibers of composite material with angles of direction at 90° or 45° one with respect to the other.

9. Method according to any of the preceding claims, **characterized in that** said superimposition of layers of composite material comprises arranging said layers with direction of fibers of composite material avoiding angles of direction in the interval [17-19]° and [76-80]° one with respect to the other.

## Patentansprüche

1. Verfahren zur Herstellung eines Objekts aus Stein und Verbundmaterial mittels der Aufbringung von Schichten des Verbundmaterials auf das Objekt aus Stein, wobei das Verfahren Folgendes umfasst:
- eine erste Phase (100) der Definition eines physischen oder virtuellen Modells eines Objekts;
- eine zweite und nachfolgende Phase der Beurteilung eines Steinstücks von natürlichem Typ;
- eine Phase des Bearbeitens eines Stücks Naturstein, das vorab ausgewählt wurde, mittels Fräsen (104) mit dem Ziel des Reduzierens der Größe und der Form davon, auf die, die in dem physischen oder virtuellen Modell angezeigt wird;
- eine Phase des Verifizierens der Krümmung und der Rauheit der Oberfläche des gefrästen Natursteins, derart, dass sie kleiner sind als ein Minimum, das zum Aufbringen des Verbundmaterials erforderlich ist;
- eine Phase des Auswählens des Verbundmaterials und der Richtung von Fasern des Verbundmaterials gemäß der Form des zu erstellenden Objekts aus Stein und Verbundmaterial;
- eine Phase des Schneidens des Verbundmaterials gemäß der Form des zu erstellenden Objekts aus Stein und Verbundmaterial.
- eine nachfolgende Phase der Aufbringung von Schichten von Verbundmaterial (105) auf eine Oberfläche des Stücks von gefrästem Naturstein durch Kleben auf die Oberfläche und ohne einen Schritt des Polierens, wobei die Schichten von Verbundmaterial eine über der anderen überlagert sind, wobei eine Schicht Kleber zwischen einer Schicht Verbundmaterial und der anderen abgesetzt wird;
wobei die Vielzahl von Schichten von Verbundmaterial von einem flexiblen Typ sind und die Vielzahl von Schichten von Verbundmaterial derart ausgerichtet sind, dass sich eine Richtung der Fasern einer Schicht von Verbundmaterial mit Bezug auf die andere Schicht von Verbundmaterial unterscheidet.

2. Verfahren nach Anspruch 1, **dadurch gekennzeichnet, dass** die Schichten von Verbundmaterial Schichten aus unterschiedlichen Materialien umfassen und Kohlenstoff- oder Aramidmaterial umfassen.

3. Verfahren nach einem der vorhergehenden Ansprüche, **dadurch gekennzeichnet, dass** es in einer Phase der Aufbringung der Vielzahl von Schichten von Verbundmaterial (105) auf eine Oberfläche des Stücks von gefrästem Naturstein nach dem Kleben ab einem Schritt des Wartens (509) einer Zeit, die für das Trocknen der verschiedenen Schichten Kleber, die zwischen einer Vielzahl von Schichten von Verbundmaterial und der Materialschicht von Naturstein eingefügt sind, erforderlich ist, einen Schritt der Einführung des Zusammensetzens gibt, der durch eine Vielzahl von Schichten von Verbundmaterial, die auf einer Oberfläche des Natursteins überlagert sind, was in einem Vakuumsack (508) erfolgt, realisiert wird.

4. Verfahren nach einem der vorhergehenden Ansprüche, **dadurch gekennzeichnet, dass** der Schritt des Klebens mittels der Aufbringung eines Zweikomponentenepoxidklebers durchgeführt wird, dessen Fluidität mindestens gemäß den Merkmalen der Porosität des Natursteins und/oder gemäß der Richtung von Bruchlinien des Steins vorab ausgewählt wird.

5. Verfahren nach einem der vorher gehenden Ansprüche, **dadurch gekennzeichnet, dass** nach der Phase der Bearbeitung des Steins (104) mittels Fräsen nach dem Kleben der Schichten von Verbundmaterial auf die mindestens eine Oberfläche des Steins eine weitere Phase des Bearbeitens mittels Fräsen (601) des Natursteins zur Reduzierung der Gesamtdicke davon erfolgt.

6. Verfahren nach einem der vorhergehenden Ansprüche, **dadurch gekennzeichnet, dass** die Phase des Bearbeitens mittels Fräsen mittels eines Schritts des Positionierens des Natursteins auf einer numerischen Steuermaschine erfolgen und die Phase des Fräsens gemäß der Ausführung eines Softwareprogramms für den elektronischen Computerbetrieb zur Aktivierung von einem oder mehreren Fräswerkzeugen gemäß einem dreidimensionalen Softwaremodell des zu erstellenden Objekts automatisch erfolgt.

7. Verfahren nach einem der vorhergehenden Ansprüche, **dadurch gekennzeichnet, dass** nach der Phase des Fräsens ein Schritt des Verifizierens von Oberflächenmerkmalen des Natursteins (404) vor der Aufbringung der Vielzahl von Schichten des Verbundmaterials mittels Kleben vorhanden ist.

8. Verfahren nach einem der vorhergehenden Ansprüche, **dadurch gekennzeichnet, dass** die Überlagerung von Schichten von Verbundmaterial das Anordnen der Schichten in einer Richtung von Fasern von Verbundmaterial mit Richtungswinkeln von 90° oder 45° mit Bezug auf die andere umfasst.

9. Verfahren nach einem der vorhergehenden Ansprüche, **dadurch gekennzeichnet, dass** die Überlagerung von Schichten von Verbundmaterial das Anordnen der Schichten in einer Richtung von Fasern von Verbundmaterial unter Vermeidung von Richtungswinkeln im Intervall [17-19]° und [76-80]° mit Bezug auf die andere umfasst.

## Revendications

1. Méthode de production d'un objet en pierre et en matériau composite au moyen de l'application de couches dudit matériau composite audit objet en pierre, ladite méthode comprenant:
- une première phase (100) de définition d'un modèle physique ou virtuel d'un objet;
- une deuxième phase suivante d'évaluation d'un morceau de pierre de type naturel;
- une phase de travail par fraisage (104) d'un morceau de pierre naturelle sélectionné à l'avance jusqu'à la fin de la réduction de sa taille et de sa forme à celles indiquées dans ledit modèle physique ou virtuel;
- une phase de vérification de la courbure et de la rugosité de la surface de la pierre naturelle fraisée, afin qu'elles soient inférieures au minimum nécessaire à l'application du matériau composite;
- une phase de sélection du matériau composite et de la direction des fibres dudit matériau composite en fonction de la forme de l'objet en pierre et du matériau composite à créer;
- une phase de coupure dudit matériau composite en fonction de la forme de l'objet en pierre et du matériau composite à créer;
- une phase ultérieure d'application de couches de matériau composite (105) sur une surface dudit morceau de pierre naturelle fraisée au moyen d'un collage sur ladite surface et sans une étape de polissage, où lesdites couches de matériau composite sont superposées les unes sur les autres en déposant une couche de colle entre une couche de matériau composite et l'autre;
où ladite pluralité de couches de matériau composite est d'un type flexible et ladite pluralité de couches de matériau composite est orientée avec une direction des fibres distinguant une couche de matériau composite par rapport à l'autre couche de matériau composite.

2. Méthode selon la revendication 1, **caractérisée en ce que** lesdites couches de matériau composite comprennent des couches de matériaux différents et comprennent du carbone ou de l'aramide.

3. Méthode selon l'une quelconque des revendications précédentes, **caractérisée en ce que**, dans une phase d'application de ladite pluralité de couches de matériau composite (105) sur une surface dudit morceau de pierre naturelle fraisée, après ledit collage, il y a une étape d'introduction d'un assemblage réalisé par une pluralité de couches de matériau composite superposées à une surface de ladite pierre naturelle travaillée à l'intérieur d'un sac sous vide (508) à partir d'une étape d'attente (509) d'un temps nécessaire au séchage des différentes couches de colle interposées entre une pluralité de couches de matériau composite et la couche de matériau en pierre naturelle.

4. Méthode selon l'une quelconque des revendications précédentes, **caractérisée en ce que** ladite étape de collage est réalisée au moyen de l'application d'une colle bi-composant époxy dont la fluidité est préalablement choisie au moins en fonction des caractéristiques de porosité de ladite pierre naturelle et/ou selon la direction des lignes de fracture de la pierre.

5. Méthode selon l'une quelconque des revendications précédentes, **caractérisée en ce qu'**après ladite phase de travail de ladite pierre (104) par fraisage, après le collage desdites couches de matériau composite sur ladite au moins une surface de ladite pierre, se déroule une autre phase de travail par fraisage (601) de ladite pierre naturelle pour une réduction de son épaisseur globale.

6. Méthode selon l'une quelconque des revendications précédentes, **caractérisée en ce que** ladite phase de travail par fraisage a lieu au moyen d'une étape de positionnement de ladite pierre naturelle sur une machine à commande numérique et ladite phase de fraisage a lieu automatiquement, conformément à l'exécution d'un logiciel pour ordinateur électronique opérant l'activation d'un ou plusieurs outils de fraisage selon un modèle logiciel tridimensionnel de l'objet à créer.

7. Méthode selon l'une quelconque des revendications précédentes, **caractérisée en ce qu'**après ladite phase de fraisage il y a une étape de vérification des caractéristiques superficielles de ladite pierre naturelle (404) avant l'application au moyen d'un collage de ladite pluralité de couches dudit matériau composite.

8. Méthode selon l'une quelconque des revendications précédentes, **caractérisée en ce que** ladite superposition de couches de matériau composite comprend l'agencement desdites couches avec une direction de fibres de matériau composite avec des angles de direction à 90° ou 45° l'une par rapport à l'autre.

9. Méthode selon l'une quelconque des revendications précédentes, **caractérisée en ce que** ladite superposition de couches de matériau composite comprend l'agencement desdites couches avec une direction de fibres de matériau composite en évitant des angles de direction entre [17-19]° et [76-80]° l'une par rapport à l'autre.
